## Europäisches Patentamt

## European Patent Office

## Office européen des brevets

(19)

(11) Numéro de publication: **0 214 214 B1**

## (12) FASCICULE DE BREVET EUROPEEN

(45) Date de publication du fascicule du brevet: **06.06.90**

(51) Int. Cl.⁵: **B 41 F 13/12**

(21) Numéro de dépôt: **86901428.2**

(22) Date de dépôt: **07.03.86**

(86) Numéro de dépót international:
**PCT/FR86/00074**

(87) Numéro de publication internationale:
**WO 86/05141 12.09.86 Gazette 86/20**

(54) **PROCEDE ET DISPOSITIF DE POSITIONNEMENT D'OBJETS LES UNS PAR RAPPORT AUX AUTRES, EN PARTICULIER DES ROULEAUX D'IMPRESSION DE COULEURS DANS UNE PRESSE ROTATIVE OFFSET.**

(30) Priorité: **08.03.85 FR 8503464**

(43) Date de publication de la demande:
**18.03.87 Bulletin 87/12**

(45) Mention de la délivrance du brevet:
**06.06.90 Bulletin 90/23**

(84) Etats contractants désignés:
**AT BE CH DE FR GB IT LI LU NL SE**

(56) Documents cités:
**EP-A-0 123 305**

(73) Titulaire: **BERTIN & CIE**
**Zone Industrielle Boîte postale 3**
**F-78373 Plaisir Cédex (FR)**
(73) Titulaire: **CELOGIC**
**Mini Parc Rue de la Croix Verte Prolongée**
**F-34080 Montpellier (FR)**

(72) Inventeur: **BRUNETTI, Michel**
**36, rue de l'Etang**
**F-78000 Versailles (FR)**
Inventeur: **HOLSTEIN, Jean-Claude 3, mail des Tuyas**
**Résidence Pas du Lac**
**F-78190 Montigny le Bretonneux (FR)**
Inventeur: **BRUNET, Alain**
**145, impasse de la Voie Romaine**
**F-34000 Montpellier (FR)**
Inventeur: **BORRAS, Jean, Denis**
**51, Grande Rue Jean Moulin**
**F-34000 Montpellier (FR)**

(74) Mandataire: **Ramey, Daniel**
**Cabinet Ores 6 Avenue de Messine**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

L'invention concerne un procédé et un dispositif de positionnement d'objets les uns par rapport aux autres, applicables en particulier à l'impression en couleurs d'un support quelconque (papier, tissu, etc) et notamment l'impression de papier dans une presse rotative offset.

L'impression en quadrichromie du papier dans une presse rotative offset est basée sur le principe de la superposition, sur le papier, de quatre images imprimées chacune dans une couleur fondamentale (noir, bleu, jaune, rouge). Le papier défile sous quatre rouleaux d'impression dont chacun porte un cliché ou analogue fixé sur le rouleau dans une disposition déterminée de façon précise et imprime sur le papier une image dans une couleur fondamentale, les quatre images devant être exactement superposées pour éviter les débordements des couleurs les unes par rapport aux autres. Les rouleaux d'impression sont équipés de moteurs permettant de les déplacer dans deux directions perpendiculaires (déplacement par rotation autour de l'axe du rouleau et déplacement transversal le long de cet axe), les positions des rouleaux étant réglées et ajustées en général par rapport au rouleau d'impression de la couleur noire.

Dans le cas de l'impression recto-verso simultanée, le papier défile dans des groupes successifs de deux rouleaux d'impression qui sont associés tous les deux à la même couleur fondamentale, le principe de l'impression sur chaque face du papier restant le même que celui exposé ci-dessus. Lorsqu'on désire une impression de très bonne qualité, il est souhaitable que les cadres des images imprimées sur les deux faces du papier ne soient pas décalés l'un par rapport à l'autre à travers le papier, ce qui amène en général à régler la position du rouleau d'impression de la couleur noire sur le verso par rapport à celle du rouleau d'impression de la même couleur sur le recto.

On connaît déjà des procédés et dispositifs de réglage automatique de la superposition des couleurs, selon lesquels une marque visible est imprimée par chaque rouleau sur le papier au voisinage de l'image imprimée, dans une zone qui doit disparaître lors de la coupe du papier à la sortie de la presse rotative. Des moyens sont prévus pour détecter successivement les positions de ces marques sur le papier, pour déterminer les écarts de positions de ces marques les unes par rapport aux autres et pour produire des signaux de commande des moteurs de déplacement des rouleaux d'impression, tendant à réduire et annuler les écarts de positionnements des marques et obtenir ainsi une superposition exacte des couleurs. Toutefois, les marques formées sur le papier ont des dimensions relativement importantes, ce qui fait qu'elles ne disparaissent pas toujours complètement lors de la coupe du papier. De plus, la précision de la détection des marques est relativement limitée. Enfin, les procédés et dispositifs connus conduisent à modifier le cheminement du papier par adjonction de rouleaux.

Par ailleurs, il est important que la durée des divers réglages de positions des rouleaux d'impression, permettant d'obtenir une bonne superposition des couleurs, soit réduite autant que possible. Ces réglages sont effectués lorsque la presse rotative tourne et comme la vitesse de défilement du papier dans la presse est élevée (de 5 à 10 mètres/seconde), le gâchis de papier consommé pendant ces réglages est important et onéreux.

Le document EP—A—0 123 305 décrit par exemple un procédé et un dispositif de positionnement de rouleaux d'impression dans une presse offset, selon laquelle les rouleaux d'impression forment sur une feuille de papier des marques triangulaires de couleurs qui défilent sous un scanner optique qui les détecte une à une et produit une suite d'impulsions électriques, transformées en signaux logiques dont la durée est proportionnelle à la dimension des marques sur l'axe de défilement. Le procédé décrit dans ce document antérieur consiste plus particulièrement à détecter deux séries de marques correctement imprimées, à vérifier si le scanner est correctement positionné par rapport à l'axe d'alignement des marques et à corriger sa position en conséquence, puis à vérifier si les marques sont bien alignées sur le même axe et à mesurer les écarts entre les marques, puis à comparer les résultats obtenus pour les deux séries de marques et, si ces résultats concordent, à commander en conséquence les moteurs de positionnement des rouleaux d'impression.

Toutefois, dans cette technique antérieure, les mesures réalisées dépendent de la vitesse de défilement de la feuille de papier, de ses déplacements latéraux ou de ses ondulations latérales, et même de ses variations d'épaisseur, ce qui oblige constamment à des opérations de calibrage et de compensation. De plus, les marques imprimées sont des triangles rectangles isocèles de grande taille, associés deux par deux à chaque rouleau d'impression, et elles occupent beaucoup de place sur un bord de la feuille de papier. L'invention a notamment pour but de réduire dans une très large mesure ces divers inconvénients, grâce à un procédé et un dispositif permettant un positionnement rapide et précis des rouleaux d'impression les uns par rapport aux autres.

Elle propose à cet effet un procédé de positionnement d'objets les uns par rapport aux autres, en particulier des rouleaux d'impression de couleurs dans une presse rotative offset, consistant à prévoir sur chaque objet un repère de positionnement dans un plan, à former au moyen de chaque repère une marque visible sur un support parallèle à ce plan, à détecter les positions de ces marques sur le support, à les comparer entre elles pour calculer des écarts de positionnement et à déplacer les objets les uns par rapport aux autres selon deux axes perpendiculaires dudit plan pour réduire et annuler ces écarts ou les rendre égaux à des valeurs théoriques, caractérisé en ce qu'il consiste à prendre une image d'un groupe de marques sur le support, à faire subir à cette image une conversion analogique-numérique, à centrer sur cette image numérisée une fenêtre d'analyse contenant un point de référence que l'on superpose à une marque du support, choisie arbitrairement comme marque de référence, et à déterminer dans la fenêtre les écarts, par rapport à deux axes parallèles aux axes de déplacement des objets, entre chaque marque autre que la marque de référence et le point de référence précité.

Grâce à la détection simultanée et instantanée des marques formées sur le support, et au traitement numérique des positions détectées des marques pour la détermination des signaux de commande de déplacement des objets, l'invention permet de positionner ces objets les uns par rapport aux autres avec une précision et une rapidité très largement supérieures à celles de la technique antérieure.

En particulier, lorsque l'invention est appliquée au positionnement des rouleaux imprimeurs dans une presse rotative offset, elle permet de réduire à quelques dizaines de secondes la durée des réglages nécessaires pour la superposition exacte des couleurs, limitant ainsi la quantité de papier gâchée pendant ces réglages.

Selon encore une autre caractéristique de l'invention, on améliore encore la précision de ces réglages en déterminant les barycentres des images des marques et en calculant les écarts entre ces barycentres et le point de référence précité de la fenêtre d'analyse avant de rendre ces écarts égaux aux valeurs théoriques prédéterminées.

Selon encore une autre caractéristique de l'invention, le procédé consiste à prendre les images instantanées d'un nombre prédéterminé de groupes successifs de marques formées sur le support, à déterminer les positions des barycentres des images des marques, et à vérifier les formes des images des marques et la cohérence des positions des barycentres avant de calculer ou non les écarts précités à partir des valeurs ' moyennes des positions des barycentres.

On évite ainsi de prendre en compte, comme marque, un défaut ou une tache du support, une déformation accidentelle d'une marque, ou tout autre défaut correspondant.

Selon encore une autre caractéristique de l'invention, on prévoit sur chaque objet deux repères de positionnement qui forment deux marques distantes l'une de l'autre sur le support, et on détecte l'écart entre une droite passant par ces deux marques et une droite de référence correspondant à l'axe de déplacement du support.

On peut ainsi détecter unpositionnement en travers d'un objet par rapport aux autres.

Selon encore une autre caractéristique de l'invention, applicable notamment au cas de l'impression recto-verso simultanée, le support se trouve entre deux ensembles d'objets précités et est formé avec des groupes de marques sur ses deux faces; on détecte les positions d'au moins une marque sur une face du support et de la marque correspondante sur l'autre face du support, et on déplace l'un des deux objets correspondants qui sont situés de part et d'autre du support pour obtenir le recalage de ces deux marques. On peut ainsi assurer la superposition des cadres d'images imprimés sur les deux faces d'une feuille ou d'une bande de papier.

L'invention propose également un dispositif de positionnement d'objets les uns par rapport aux autres, en particulier des rouleaux d'impression de couleurs dans une presse rotative offset, ces objets comportant des repères de positionnement dans un plan qui forment des marques sur un support parallèle à ce plan, le dispositif comprenant des moyens de détection des marques, des moyens de calcul des écarts entre les positions des marques et des positions théoriques et de détermination de signaux appliqués à des moyens de commande de déplacement des objets le long de deux axes perpendiculaires du plan précité, caractérisé en ce que les moyens de détection comprennent des moyens vidéo de prise d'une image d'un groupe de marques formées sur le support, un convertisseur analogique-numérique reliant ces moyens de prise d'images à des mémoires d'enregistrement numériques, et des moyens de traitement de l'information pour centrer sur l'image numérique enregistrée une fenêtre d'analyse comprenant un point fixe de référence correspondant à une marque prédéterminée, et pour mesurer les écarts, par rapport à deux axes perpendiculaires, entre le point de référence et les positions des autres marques dans la fenêtre d'analyse.

Les moyens de prise d'image et les moyens correspondants d'éclairage peuvent être fixés sur des bâtis extérieurs, ne nécessitant aucune modification du chemin de roulement de la presse.

Avantageusement, les moyens de traitement de l'information comprennent des moyens de calcul des barycentres des images des marques, et de détermination des positions de ces barycentres par rapport au point de référence de la fenêtre d'analyse.

De préférence, les moyens de prise d'images comprennent une caméra matricielle par exemple du type C.C.D. (Charge Coupled Device), qui est munie par exemple d'un objectif à longueur focale variable.

Pour améliorer la précision, cette caméra peut être associée à un stroboscope pour la prise d'images fixes d'un support défilant à grande vitesse.

Dans le cas de l'impression simultanée des deux faces du support, ce dispositif comprend deux moyens identiques de prise d'image instantanée, disposés d'un côté et de l'autre du support et reliés aux mêmes moyens de traitement de l'information, ces derniers étant propres à déterminer l'écart entre une marque formée sur une face du support et une marque correspondante formée sur l'autre face du support, et à produire un signal de commande de déplacement d'objet pour annuler cet écart.

Dans la description qui suit, faite à titre d'exemple, on se réfère aux dessins annexés, dans lesquels:

la figure 1 est une vue en plan, très simplifiée, d'une presse rotative offset;

la figure 2 est une vue en élévation de cette presse;

la figure 3 représente une partie d'une bande de papier imprimée par cette presse;

la figure 4 représente schématiquement un dispositif selon l'invention, appliqué à l'impression recto-verso du papier dans une presse du type de celle représentée dans les figures 1 et 2;

la figure 5 illustre le positionnement des images des marques imprimées, dans une fenêtre d'analyse;

la figure 6 est un organigramme des phases essentielles du procédé selon l'invention.

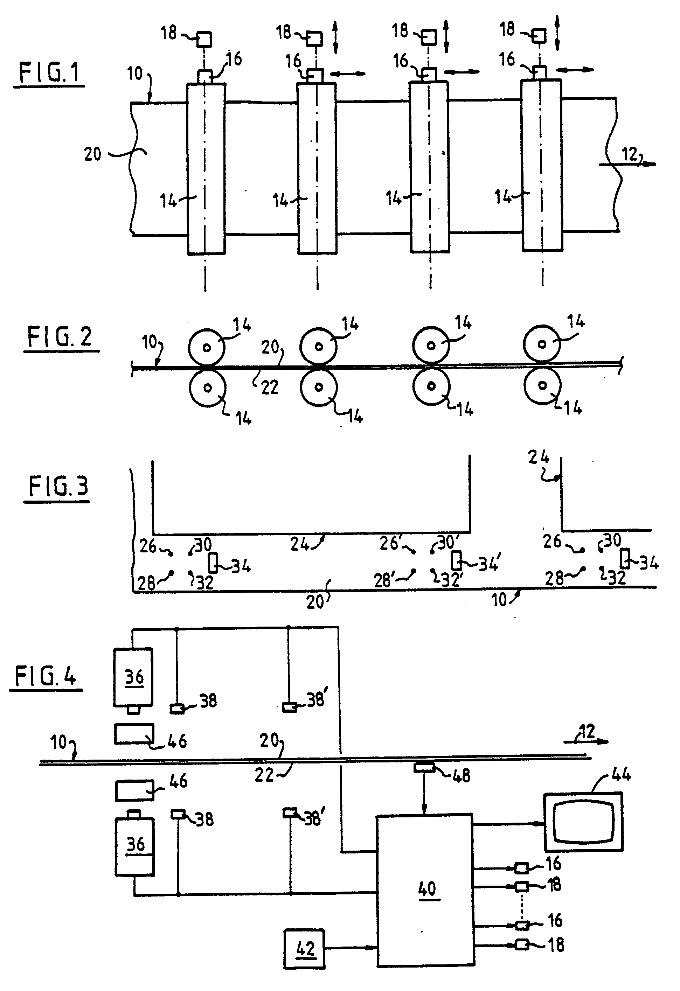

On se réfère d'abord aux figures 1 et 2 qui représentent, de façon très schématique et simplifiée, une presse rotative offset pour l'impression recto-verso d'une bande de papier 10 déroulée à partir d'une bobine non représentée et se déplaçant dans le sens indiqué par la flèche 12 à une vitesse relativement importante, comprise en général entre 5 et 10 mètres par seconde.

La presse rotative comprend, dans le cas d'une impression en quadrichromie, quatre groupes de deux rouleaux d'impression 14 dont l'axe est horizontal et perpendiculaire à la direction 12 de déplacement de la bande de papier. Ces rouleaux 14 sont groupés deux à deux en étant verticalement superposés l'un par rapport à l'autre, les différents groupes de rouleaux étant écartés les uns des autres dans la direction de défilement du papier. Chaque rouleau 14 supporte l'image d'un cliché à imprimer dans l'une des quatre couleurs fondamentales. Par exemple, les rouleaux 14 les plus à gauche dans les figures 1 et 2 sont destinés à l'impression de la couleur noire, tandis que les rouleaux suivants impriment les couleurs bleue, rouge et jaune. Des groupes de rouleaux supplémentaires peuvent être prévus pour l'impression de couleurs particulières, par exemple doré, argenté, etc.

Comme indiqué plus haut, les images imprimées par les différents rouleaux sur la bande de papier 10 doivent être exactement superposés, pour éviter les débordements des couleurs les unes par rapport aux autres. Bien que les clichés soient positionnés et fixés sur les rouleaux avec le plus grand soin, d'une façon qu'il n'est pas nécessaire de rappeler ici, il est inévitable de procéder à des réglages supplémentaires de positionnement pour obtenir une superposition exacte des images imprimées. Pour cela, les rouleaux 14 sont munis de moyens permettant de les déplacer dans un plan parallèle au plan de défilement de la bande de papier 10, selon deux axes perpendiculaires qui sont schématisés en figure 1, dont l'un est parallèle à la direction de défilement du papier et dont l'autre est parallèle à l'axe des rouleaux 14. Les déplacements de chaque rouleau 14 le long de ces deux axes sont assurés par deux moteurs électriques 16 et 18, par exemple des moteurs asynchrones triphasés, le moteur 16 assurant le positionnement angulaire d'un rouleau 14 par rapport à l'axe de son arbre d'entraînement en rotation, ce qui correspond à un déplacement de l'image imprimée par ce rouleau le long de l'axe 12 de défilement de la bande de papier, tandis que le moteur 18 assure un déplacement du rouleau 14 et de son arbre d'entraînement dans le sens transversal.

Le rouleau 14 d'impression de la couleur noire sur le recto 20 de la bande de papier 10, sert par exemple de rouleau de référence et, en conséquence, ses moteurs 16 et 18 de déplacement selon les deux axes perpendiculaires ne seront pas utilisés.

On se réfère maintenant à la figure 3 représentant une partie du recto 20 de la bande de papier 10, à la sortie des rouleaux imprimeurs 14. Le recto 20 porte donc une succession d'images 24, imprimées à intervalles réguliers, chaque image 24 étant formée par superposition de quatre images dans les quatre couleurs fondamentales. Entre le bord longitudinal d'une image 24 et le bord longitudinal correspondant de la bande de papier 10, sont imprimées quatre marques 26, 28, 30 et 32, qui sont précédées, dans le sens de défilement du papier, par une marque 34, telle qu'une barre transversale de couleur noire par exemple.

Selon l'invention, les quatre marques 26, 28, 30 et 32 sont des points de petites dimensions, ayant par exemple un diamètre inférieur à 1 mm, qui sont groupés sensiblement en carré ou en rectangle. Chaque point est imprimé par un rouleau différent et est l'image imprimée d'un repère de positionnement prévu sur le cliché fixé sur le rouleau imprimeur en question. La marque 26 sera donc par exemple un point noir, la marque 28 un point bleu, la marque 30 un point rouge et la marque 32 un point jaune, bien que la couleur de chaque point n'ait aucune importance pour la suite des opérations.

Les repères de positionnement formés sur les clichés et produisant les marques 26, 28, 30 et 32 sont disposés les uns par rapport aux autres sur les clichés de façon à ce que les quatre marques se trouvent aux quatre coins d'un carré ou d'un rectangle prédéterminé sur le recto de la bande de papier lorsque les quatre images de couleurs différentes sont exactement superposées à l'impression. Les dimensions de ce carré ou de ce rectangle peuvent être relativement très faibles, et inférieures à 1 cm en longueur et en largeur.

Bien entendu, dans le cas de l'impression recto-verso simultanée d'une bande de papier, les deux faces de la bande de papier comprennent les marques précitées 26, 28, 30, 32 au voisinage immédiat de chaque image imprimée, ces marques n'étant pas nécessairement juxtaposées verticalement à travers l'épaisseur du papier.

On se réfère maintenant à la figure 4, qui représente schématiquement un dispositif selon l'invention, permettant le positionnement des rouleaux imprimeurs d'une presse rotative offset à impression recto-verso simultanée.

Ce dispositif est placé à la sortie de la presse, en aval des rouleaux imprimeurs par rapport à la direction de défilement du papier et en amont des moyens de coupe du papier.

Il comprend essentiellement deux caméras 36 qui sont par exemple verticalement alignées et disposées de part et d'autre de la bande de papier 10, deux cellules photoélectriques 38 de déclenchement des caméras 36, des moyens 40 de traitement de l'information, un clavier 42 ou des moyens analogues d'entrée d'information dans les moyens de traitement 40, et un écran vidéo de visualisation 44.

Les caméras 36 sont des caméras matricielles du type C.C.D. dont la sortie est reliée par un convertisseur analogique-numérique à des mémoires d'enregistrement des moyens 40 de traitement de l'information.

De préférence, on prévoit un stroboscope 46 entre l'objectif d'une caméra 36 et la bande de papier 10 qui défile sous cet objectif de façon à ce que la caméra puisse prendre une image fixe instantanée du groupe de quatre marques imprimées 26, 28, 30 et 32 qui défilent sous l'objectif.

Le fonctionnement de la caméra pour la prise d'une image d'un groupe de marques est commandé par la cellule de déclenchement 38, qui détecte le passage de la marque particulière 34 imprimée en avant de chaque groupe de quatre marques 26, 28, 30, 32. Le fonctionnement de la cellule de déclenchement 38 peut lui-même être autorisé à intervalles réguliers uniquement, par exemple en utilisant le signal de sortie d'une roue codeuse 48 qui équipe en général une presse rotative offset et qui permet une coupe très précise de la bande de papier 10. Les impulsions fournies par la roue codeuse 48 sont par exemple comptées par un compteur faisant partie des moyens de traitement 40 et qui autorise le fonctionnement de la cellule 38 chaque fois qu'un nombre prédéterminé d'impulsions a été compté.

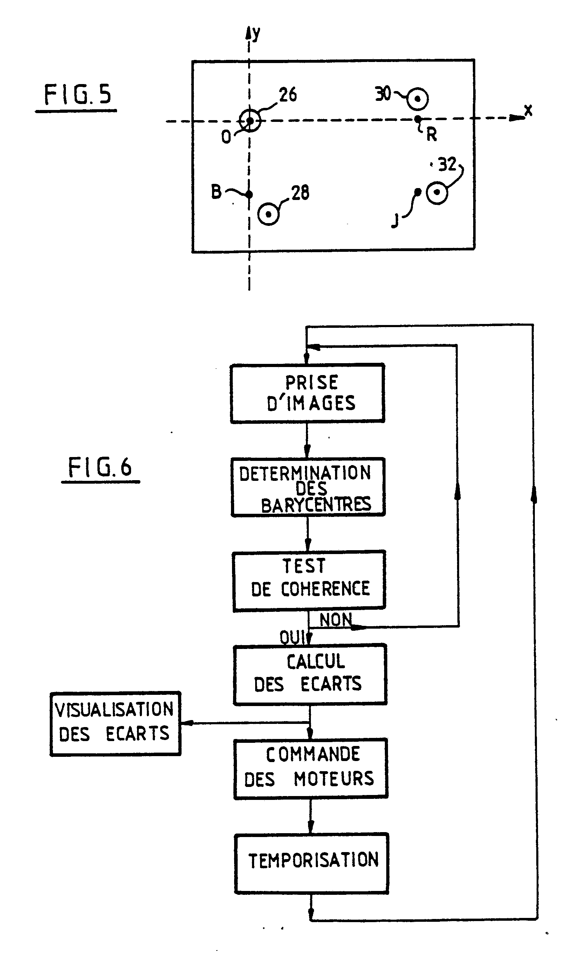

On va maintenant décrire, en référence aux figures 5 et 6, le procédé selon l'invention ainsi que le fonctionnement du dispositif de là figure 4.

L'image vidéo de quatre marques imprimées 26, 28, 30, 32, prise par une caméra 36 et enregistrée sous forme numérique dans des mémoires des moyens de traitement 40, est comparée à une fenêtre d'analyse représentée schématiquement en figure 5 et ayant un format déterminé comprenant par exemple environ 480 points d'analyse par ligne et 360 points d'analyse par colonne. La fenêtre d'analyse 50 comprend un point de référence 0 par lequel passent deux axes perpendiculaires de référence x et y qui correspondent aux axes de déplacement des rouleaux 14.

La fenêtre d'analyse 50 est tout d'abord centrée sur l'image des quatre marques 26, 28, 30, 32 par superposition du point de référence 0 et du centre (ou barycentre) de l'image de la marque 26 formée sur le papier par le rouleau 14 d'impression de la couleur noire.

Dans la fenêtre d'analyse 50, les points B, R et J représentent les positions théoriques que devraient occuper les barycentres des images des marques 28, 30 et 32 lorsque les images imprimées sur le papier dans les quatre couleurs fondamentales sont parfaitement superposées.

Le procédé selon l'invention consiste à déterminer les barycentres des images des marques 26, 28, 30, 32, à superposer le barycentre de l'image de la marque 26 et le point 0 de référence, à déterminer les coordonnées, par rapport aux axes x et y, des barycentres des images des marques 28, 30 et 32, et à déterminer les écarts de ces barycentres par rapport aux points B, R et J respectivement. Ces écarts de positions étant déterminés, les moyens 40 de traitement de l'information déterminent les signaux qui doivent être appliqués aux moyens de commande des moteurs 16, 18 des différents rouleaux 14 pour réduire et annuler ces écarts.

De préférence, on prévoit de prendre un certain nombre d'images de groupes de marques 26, 28, 30, 32, qui défilent sous l'objectif de la caméra, de déterminer les barycentres des images des marques, de faire subir un test de cohérence aux formes des images des marques et aux positions déterminées des barycentres, ce qui permet de ne pas prendre en compte des défauts tels que des taches du papier et, en cas de résultats satisfaisants du test, de calculer les écarts de positionnement à partir des valeurs moyennes des positions des barycentres des images de marques. Les signaux de correction de position des rouleaux 14, élaborés par les moyens de traitement 40, sont appliqués aux moteurs 16 et 18 de déplacement des rouleaux, puis, après un intervalle de temps prédéterminé, les opérations précitées sont répétées pour vérifier la parfaite superposition des images imprimées sur la bande de papier par les différents rouleaux 14.

L'écran vidéo 44 permet l'affichage des écarts de positionnement calculés par les moyens de traitement 40. Par ailleurs, le clavier ou analogue 42 permet à un opérateur de modifier les écarts entre les positions théoriques des marques, c'est-à-dire les positions des points théoriques B, R et J par rapport au point 0, lorsqu'il le juge nécessaire pour l'obtention de meilleurs résultats, et/ou de valider, après un premier réglage sur la base des valeurs théoriques des écarts, les écarts mesurés pour leur faire jouer le rôle des écarts théoriques pour la suite des opérations.

Bien entendu, les moyens 40 de traitement de l'information ont une capacité permettant les réglages simultanés de superposition des couleurs sur les deux faces de la bande de papier 10, ces réglages étant indépendants l'un de l'autre.

Ce dispositif permet également de régler les positions l'une par rapport à l'autre des images qui sont imprimées sur le recto et sur le verso de la bande de papier. Il suffit pour cela que la marque 26 imprimée sur le recto de la bande de papier 10 par le rouleau 14 d'impression de la couleur noire ait des coordonnées mesurées sensiblement égales à celle de la marque correspondante 26 imprimée sur le verso. Les moyens 40 de traitement de l'information permettent de comparer les positions des barycentres des images des deux marques 26 formées sur le recto et sur le verso de la bande de papier et de calculer les signaux de commande des moteurs 16 et 18 de déplacement du rouleau 14 d'impression de la couleur noire sur le verso de la bande de papier. On obtient ainsi le recalage des cadres des images qui sont imprimées sur le recto et sur le verso du papier.

Le procédé et le dispositif selon l'invention permettent également de détecter et d'afficher le travers d'un cliché sur un rouleau.

On prévoit pour cela, comme représenté en figure 3, que chaque cliché fixé sur un rouleau imprimeur 14 va comprendre deux repères de positionnement, l'un au voisinage d'une extrémité longitudinale de l'image à imprimer, l'autre au voisinage de l'autre extrémité longitudinale de cette image. L'un de ces repères de positionnement va former sur le papier la marque 26 déjà décrite, dans le cas de la couleur noire, l'autre repère de positionnement va former une marque 26' qui est écartée de la marque 26, dans le sens de défilement du papier, d'une distance qui est du même ordre que la longueur du cliché fixé sur le rouleau imprimeur. De même, les clichés fixés sur les autres rouleaux d'impression peuvent former sur le papier des marques 28', 30' et 32' en avant desquelles sera imprimée une barre transversale 34' de déclenchement d'une cellule photoélectrique 38' commandant une prise d'image par la caméra vidéo correspondante 36.

Pour détecter le travers d'un cliché, il suffit de vérifier si une droite passant par deux points 26 et 26' correspondant à la même image 24 correspond à une droite de référence passant par le point 26 ou si elle s'en écarte en oblique.

La mesure de l'angle représentant le travers peut être également affichée sur l'écran 44.

Des essais ont montré que le procédé et le dispositif selon l'invention permettent de réduire à quelques dizaines de secondes la durée de réglage de la superposition de couleurs dans une presse rotative offset, et de réduire ainsi la quantité de papier gâchée durant ces réglages. En outre, la précision des réglages réalisés est très supérieure à celle que l'on pouvait obtenir auparavant. Cette précision peut être augmentée autant qu'on le souhaite, lorsque la caméra vidéo utilisée est équipée d'un objectif à longueur focale variable et que les marques 26, 28, 30, 32 imprimées sur le papier sont proches les unes des autres.

Le procédé et le dispositif selon l'invention ne sont pas limités au réglage de la superposition des couleurs dans une presse du type offset et s'appliquent également à l'impression des tissus et au positionnement en général d'objets les uns par rapport aux autres, lorsque ces objets sont déplaçables les uns par rapport aux autres dans un plan.

**Revendications**

1. Procédé de positionnement d'objets les uns par rapport aux autres, en particulier des rouleaux (14) d'impression de couleurs dans une presse rotative offset, consistant à prévoir sur chaque objet (14) un repère de positionnement dans un plan, à former au moyen de chaque repère une marque visible (26, 28, 30, 32) sur un support (10) parallèle à ce plan, à détecter les positions de ces marques sur le support, à les comparer entre elles pour calculer des écarts de positionnement et à déplacer les objets (14) les uns par rapport aux autres selon deux axes perpendiculaires dudit plan pour réduire et annuler ces écarts ou les rendre égaux à des valeurs théoriques, caractérisé en ce qu'il consiste à prendre une image d'un groupe de marques (26, 28, 30, 32) formées sur le support (10), à faire subir à cette image une conversion analogique-numérique, à centrer sur l'image numérisée une fenêtre d'analyse (50) comprenant un point (0) de référence que l'on superpose sur une marque (26) du support, choisie arbitrairement comme marque de référence, et à déterminer dans la fen être les écarts, par rapport à deux axes (x, y) correspondant aux axes de déplacement des objets, entre chaque marque (28, 30, 32) autre que la marque de référence et le point de référence (0) précité.

2. Procédé selon la revendication 1, caractérisé en ce que les images des marques (26, 28, 30, 32) ayant une certaine surface par rapport aux points de la fen être d'analyse (50), on détermine les barycentres des images des marques et on calcule les écarts entre ces barycentres et le point de référence (0) précité de la fenêtre d'analyse.

3. Procédé selon la revendication 1 ou 2, caractérisé en ce qu'on prend les images instantanées d'un nombre prédéterminé de groupes successifs de marques (26, 28, 30, 32), on détermine les positions des barycentres des images des marques, et on vérifie la cohérence des positions des barycentres et la forme des images des marques avant de calculer ou non les écarts précités à partir de valeurs moyennes des positions des barycentres.

4. Procédé selon la revendication 3, caractérisé en ce qu'on peut modifier les valeurs théoriques précitées des écarts entre les positions des barycentres et le point de référence de la fenêtre d'analyse.

5. Procédé selon l'une des revendications précédentes, caractérisé en ce qu'on prévoit sur chaque objet (14) deux repères de positionnement formant deux marques (26, 26', ..., 32, 32') qui sont distantes l'une de l'autre sur le support et on détecte l'écart entre une droite passant par ces deux marques et une droite de référence passant par l'une prédéterminée de ces marques.

6. Procédé selon l'une des revendications précédentes, caractérisé en ce qu'on forme sur le support (10), en avant de chaque groupe de marques précitées, une marque (34) de commande de prise d'une image du groupe de marques.

7. Procédé selon l'une des revendications précédentes, caractérisé en ce que, le support (10) se trouvant entre deux ensembles d'objets (14) précités et étant formé avec des groupes de marques (26, 28, 30, 32) sur ses deux faces, on détecte les positions d'au moins une marque (26) sur une face du support et de la marque correspondante sur l'autre face du support, et on déplace l'un des deux objets (14) correspondants qui sont situés de part et d'autre du support (10) pour obtenir le recalage de ces deux marques (26) à travers le support.

8. Procédé selon l'une des revendications précédentes, caractérisé en ce que les marques formées sur le support (10) sont des points ayant par exemple un diamètre inférieur à 1 mm.

9. Dispositif de positionnement d'objets les uns par rapport aux autres, en particulier des rouleaux (14) d'impression de couleurs dans une presse rotative offset, ces objets comportant des repères de positionnement dans un plan qui forment des marques (26, 28, 30, 32, 34) sur un support (10) disposé dans ce plan, le dispositif comprenant des moyens (36) de détection de ces marques (40), de calcul des écarts entre les positions des marques et des positions théoriques et de détermination de signaux appliqués à des moyens (16, 18) de commande de déplacement des objets (14) le long de deux axes perpendiculaires du plan, caractérisé en ce que les moyens de détection comprennent des moyens vidéo (36) de prise d'une image d'un groupe de marques (26, 28, 30, 32) formées sur le support (10), un convertisseur analogique-numérique reliant les moyens (36) de prise d'image à des mémoires d'enregistrement numériques, et en ce que les moyens de calcul comprennent des moyens (40) de traitement de l'information pour centrer sur l'image enregistrée une fenêtre d'analyse (50) comprenant un point fixe de référence (10) correspondant à une marque prédéterminée (26), et pour mesurer les écarts, par rapport à deux axes (x, y) perpendiculaires, entre le point de référence (0) et les positions des marques correspondantes dans le fenêtre d'analyse.

10. Dispositif selon la revendication 9, caractérisé en ce que les moyens (40) de traitement de l'information comprennent des moyens de détermination des barycentres des images des marques (26, 28, 30, 32) et de détermination des positions de ces barycentres par rapport au point de référence (0) de la fenêtre d'analyse.

11. Dispositif selon la revendication 9, caractérisé en ce que les moyens de prise d'image comprennent une caméra matricielle (36) par exemple du type C.C.D., munie par exemple d'un objectif à longueur focale variable.

12. Dispositif selon la revendication 11, caractérisé en ce que la caméra (36) est associée à un stroboscope (46) pour la prise d'images fixes du support (10) défilant à grande vitesse.

13. Dispositif selon l'une des revendications 9 à 12, caractérisé en ce qu'il comprend des moyens (38) de commande de prise d'images, comprenant une cellule photo-électrique détectant une marque particulière (34) formée au voisinage du groupe de marques (26, 28, 30, 32) sur le support (10) précité.

14. Dispositif selon la revendication 13, caractérisé en ce qu'il comprend des moyens (48) de commande de ladite cellule (38), qui sont sensibles à la vitesse de défilement du support (10) et qui autorisent le fonctionnement de la cellule (38) à des intervalles réguliers.

15. Dispositif selon l'une des revendications 9 à 13, caractérisé en ce que, dans le cas de l'impression simultanée des deux faces d'une bande de papier (10), il comprend deux moyens identiques (36) de prise d'image, disposés d'un côté et de l'autre de la bande de papier (10), et reliés aux mêmes moyens (40) de traitement de l'information, ces derniers étant propres à déterminer l'écart entre une marque (26) formée sur une face de la bande de papier (10) et une marque correspondante formée sur l'autre face de cette bande de papier, et à produire un signal de commande de déplacement d'un rouleau imprimeur (14) pour annuler cet écart.

16. Dispositif selon l'une des revendications 9 à 14, caractérisé en ce qu'il comprend des moyens (42) reliés aux moyens (40) de traitement de l'information, permettant à un opérateur de modifier des valeurs théoriques des écarts entre les marques (26, 28, 30, 32) formées sur le support, et/ou de valider, après un premier réglage sur la base des valeurs théoriques, les écarts mesurés comme nouvelles valeurs théoriques pour la suite des opérations.

**Patentansprüche**

1. Verfahren zum aufeinanderbezogenen Einstellen von Gegenständen, insbesondere von Farbendruckrollen (14) bei einer Rotationsoffsetpresse, bei welchem für jeden Gegenstand (14) eine Passermarke in einer Ebene vorgesehen wird, mittels jeder Passermarke ein sichtbares Zeichen (26, 28, 30, 32) auf einem Träger (10) parallel zu dieser Ebene gebildet wird, die Lagen dieser Zeichen auf dem Träger erfaßt werden, sie untereinander zum Berechnen der Einstellabweichungen verglichen werden und die Gegenstände (14) aufeinanderbezogen nach zwei senkrechten Achsen der Ebene verschoben werden, um diese Abweichungen zu verringern und aufzuheben oder sie den theoretischen Werten gleich zu setzen, dadurch gekennzeichnet, daß ein Bild einer Gruppe von auf dem Träger (10) gebildeten Zeichen (26, 28, 30, 32) aufgenommen wird, dieses Bild einer Analog-Digital-Umwandlung unterworfen wird, auf dem digitalisierten Bild ein Abtastfenster (50) mit einem Bezugspunkt (0) zentriert wird, der auf ein Zeichen (26) des Trägers überlagert wird, welches willkürlich als Bezugszeichen gewählt ist und in dem Fenster die Abweichungen bezogen auf die zwei Achsen (x, y) bestimmt werden, welche den Verschiebungsachsen der Gegenstände zwischen jedem anderen Zeichen (28, 30, 32) als das Bezugszeichen und dem Bezugspunkt (0) entsprechen.

2. Verfahren nach Anspruch 1, dadurch gekennzeichnet, daß, indem die Bilder der Zeichen (26, 28, 30, 32) verglichen mit den Punken des Abtastfensters (50) eine gewisse Oberfläche aufweisen, die Schwerpunkte der Bilder der Zeichen bestimmt werden und die Abweichungen zwischen diesen Schwerpunkten und dem Bezugspunkt (0) des Abtastfensters berechnet werden.

3. Verfahren nach Anspruch 1 oder 2, dadurch gekennzeichnet, daß die Momentanbilder einer vorbestimmten Anzahl aufeinanderfolgender Gruppen von Zeichen (26, 28, 30, 32) aufgenommen werden, die Schwerpunktslagen der Bilder der Zeichen bestimmt werden und die Obereinstimmung der Schwerpunktslagen und die Form der Bilder der Zeichen überprüft wird, bevor die Abweichungen von den Mittelwerten der Schwerpunktslagen berechnet werden oder nicht.

4. Verfahren nach Anspruch 3, dadurch gekennzeichnet, daß die theoretischen Werte der Abweichungen zwischen den Schwerpunktslagen und dem Bezugspunkt des Abtastfensters geändert werden können.

5. Verfahren nach einem der vorangehenden Ansprüche, dadurch gekennzeichnet, daß an jedem Gegenstand (14) zwei Einstellpassermarken vorgesehen werden, die zwei Zeichen (26, 26', ...32, 32') bilden, die voneinander entfernt auf dem Träger sind und die Abweichung zwischen einer durch diese zwei Zeichen liegenden Gerade und einer durch ein vorbestimmtes dieser Zeichen liegenden Bezugsgerade erfaßt wird.

6. Verfahren nach einem der vorangehenden Ansprüche, dadurch gekennzeichnet, daß auf dem Träger (10) vor jeder Gruppe von Zeichen ein Steuerzeichen (34) zum Aufnehmen eines Bildes der Gruppe von Zeichen gebildet wird.

7. Verfahren nach einem der vorangehenden Ansprüche, dadurch gekennzeichnet, daß, indem sich der Träger (10) zwischen zwei Gruppen von Gegenständen (14) befindet und auf seinen zwei Seiten mit Gruppen von Zeichen (26, 28, 30, 32) ausgebildet ist, die Lagen zumindest eines Zeichens (26) auf der einen Seite des Trägers und des entsprechenden Zeichens auf der anderen Seite des Trägers erfaßt werden und einer der zwei entsprechenden Gegenstände (14) verschoben wird, die beiderseits des Trägers (10) liegen, um das Geradestellen dieser zwei Zeichen (26) querdurch den Träger zu erhalten.

8. Verfahren nach einem der vorangehenden Ansprüche, dadurch gekennzeichnet, daß die auf dem Träger (10) gebildeten Zeichen Punkte sind, die beispielsweise einen unteren Durchmesser von 1 mm besitzen.

9. Vorrichtung zum aufeinanderbezogenen Einstellen von Gegenständen, insbesondere von Farbendruckrollen (14) bei einer Rotationspresse, bei welcher diese Gegenstände Einstellpassermarken in einer Ebene aufweisen, die auf einem in dieser Ebene angeordneten Träger (10) Zeichen (26, 28, 30, 32, 34) bilden, wobei die Vorrichtung Mittel (36) zum Erfassen dieser Zeichen (40), zum Berechnen der Abweichungen zwischen den Lagen der Zeichen und theoretischen Lagen und zum Bestimmen von an die Steuermittel (16, 18) zum Verschieben der Gegenstände (14) entlang zwei senkrechten Achsen der Ebene angelegten Signalen miteinschließt, dadurch gekennzeichnet, daß die Mittel zum Erfassen Videomittel (36) zum Aufnehmen eines Bildes einer Gruppe von auf dem Träger (10) gebildeten Zeichen (26, 28, 30, 32) und einem Analog-Digital-Wandler, welcher die Mittel (36) zum Aufnehmen eines Bildes mit den Speichern zur Digitalaufnahme verbindet, umfassen und daß die Mittel zum Berechnen Mittel (40) zur Informationsverarbeitung für das Zentrieren eines Abtastfensters (50) mit einem festen Bezugspunkt (10), der einem vorbestimmten Zeichen (26) entspricht, und für das Messen der Abweichungen bezüglich zweier senkrechter Achsen (x, y) zwischen dem Bezugspunkt (0) und den Lagen der entsprechenden Zeichen in dem Abtastfenster umfassen.

10. Vorrichtung nach Anspruch 9, dadurch gekennzeichnet, daß die Mittel (40) zur Informationsverarbeitung Mittel zum Bestimmen der Bildschwerpunkte der Zeichen (26, 28, 30, 32) und zum Bestimmen der Lagen dieser Schwerpunkte bezüglich des Bezugspunktes (0) des Abtastfensters miteinschließen.

11. Vorrichtung nach Anspruch 9, dadurch gekennzeichnet, daß die Mittel zum Aufnehmen eines Bildes eine Matrizenkamera (36) beispielsweise von der CCD-Art mileinschließen, die beispielsweise mit einem Objektiv veränderlicher Brennweite versehen ist.

12. Vorrichtung nach Anspruch 11, dadurch gekennzeichnet, daß der Kamera (36) ein Stroboskop (46) zum Aufnehmen von festen Bildern des Trägers (10) zugeordnet ist, der mit einer großen Geschwindigkeit durchläuft.

13. Vorrichtung nach einem der Ansprüche 9 bis 12, dadurch gekennzeichnet, daß sie Steuermittel (38) zum Aufnehmen von Bildern miteinschließt, die aus einer photoelektrischen Zelle bestehen, die ein spezielles Zeichen (34) erfaßt, das in der Umgebung der Gruppe von Zeichen (26, 28, 30, 32) auf dem Träger (10) ausgebildet ist.

14. Vorrichtung nach Anspruch 13, dadurch gekennzeichnet, daß sie Steuermittel (48) der Zelle (38) miteinschließt, welche auf die Durchlaufgeschwindigkeit des Trägers (10) empfindlich sind und welche den Betrieb der Zelle (38) in regelmäßigen Intervallen freigeben.

15. Vorrichtung nach einem der Ansprüche 9 bis 13, dadurch gekennzeichnet, daß sie in dem Falle eines gleichzeitigen Druckens der beiden Seiten eines Papierbandes (10) zwei identische Mittel (36) zum Aufnehmen eines Bildes miteinschließt, die auf der einen und der anderen Seite des Papierbandes angeordnet sind und mit denselben Mitteln (40) zur Informationsverarbeitung verbunden sind, wobei diese letzteren geeignet sind, die Abweichung zwischen einem Zeichen (26), das auf einer Seite des Papierbandes (10) gebildet ist, und einem entsprechendem Zeichen, das auf der anderen Seite dieses Papierbandes gebildet ist zu bestimmen und ein Steuersignal zum Verschieben einer Druckerrolle (14) herzustellen, um diese Abweichung aufzuheben.

16. Vorrichtung nach einem der Ansprüche 9 bis 14, dadurch gekennzeichnet, daß sie Mittel (42) miteinschließt, die mit den Mitteln (40) zur Informationsverarbeitung verbunden sind, wodurch es einem Bediener ermöglicht wird, die theoretischen Werte der Abweichungen zwischen den auf dem Träger gebildeten Zeichen (26, 28, 30, 32) zu verändern und/oder nach einer ersten Regelung auf der Grundlage der theoretischen Werte die gemessenen Abweichungen als neue theoretische Werte für die Folge der Arbeitsschritte gültig zu machen.

**Claims**

1. A method of positioning objects relative to one another, in particular colour print rolls (14) in an offset rotary press, the method consisting in providing a positioning reference for positioning in a plane on each object (14), in forming a visible mark (26, 28, 30, 32) on a medium (10) parallel to said plane, in detecting the positions of the marks on the medium, in comparing the positions to each other in order to calculate errors, and in displacing the objects (14) relative to one another along two perpendicular axes in said plane to reduce and cancel said errors or make them equal to theoretical values, the method being characterized in that it consists in taking an image of a group of marks (26, 28, 30, 32) formed on the medium (10), in subjecting said image to analog-to-digital conversion, in centering a scan window (50) on the digitized image, the scan window including a reference point (0) which is superposed on one of the marks (26) on the medium, said mark being arbitrarily chosen as the reference mark, and in determining the separations in the window between each mark (28, 30, 32) other than the reference mark and the above specified reference point (0) relative to two axes (x, y) corresponding to the axes of object displacement.

2. A method according to claim 1, characterized in that the images of the marks (26, 28, 30, 32) occupy a certain area relative to the points of the scan window (50), and in that the centers of gravity of the images of the marks are determined and the separations between the centers of gravity and the above-specified reference point (0) in the scan window are calculated.

3. A method according to claim 1 or 2, characterized in that instantaneous images are taken on a predetermined number of successive groups of marks (26, 28, 30, 32), in that the positions of the centers of gravity of the images of the marks are determined, and in that the coherence of the positions of the centers of gravity and the shapes of the images of the marks are verified prior to calculating or not calculating the above-specified separations on the basis of average values for the positions of the centers of gravity.

4. A method according to claim 3, characterized in that the above-specified theoretical values for the separations between the positions of the centers of gravity and the reference point in the scan window may be modified.

5. A method according to any preceding claim, characterized in that two position references are provided on each object (14), thereby forming two marks (26, 26'...32, 32') which are distant from each other on the medium, and in that the divergence between a straight line passing through the two marks and a reference straight line passing through a predetermined one of these marks is detected.

6. A method according to any preceding claim, characterized in that a mark (34) for controlling the taking of an image of the group of marks is formed on the medium (10) ahead of each of the above-specified groups of marks.

7. A method according to any preceding claim, characterized in that the medium (10) lies between two sets of the above specified objects (14) and has groups of marks (26, 28, 30, 32) formed on each of its two faces, in that the positions of at least one mark (26) on one face of the medium and the corresponding mark on the other face of the medium are detected, and in that one of the two corresponding objects (14) situated on opposite sides of the medium (10) is displaced in order to align said two marks (26) through the medium.

8. A method according to any preceding claim, characterized in that the marks formed on the medium (10) are points having, for example, a diameter of less than 1 mm.

9. A device for positioning objects relative to one another, in particular rolls (14) for printing colours in an offset rotary press, said objects including positioning references for positioning in a plane, which references form marks (26, 28, 30, 32, 34) on a medium (10) disposed in said plane, the device including means (36) for detecting said marks, and calculation means (40) for calculating the separations between the positions of the marks and theoretical positions and for determining the signals applied to means (16, 18) for controlling displacement of the objects (10) along two axes perpendicular to the plane, the device being characterized in that the detection means comprise video means (36) for taking an image of a group of marks (26, 28, 30, 32) formed on the medium (10), an analog-to-digital converter connecting the image-taking means (36) to digital recording memories, and in that the calculation means comprise data processing means (40) for centering a scan window (50) on the recorded image, the scan window including a fixed reference point (10) corresponding to a predetermined mark (26), and for measuring the separations relative to two perpendicular axes (x, y), between the reference point (0) and the positions of the corresponding marks in the scan window.

10. A device according to claim 9, characterized in that the data processor means (40) include means for determining the center of gravity of the images of the marks (26, 28, 30, 32) and means for determining the positions of said centers of gravity relative to the reference point (0) of the scan window.

11. A device according to claim 9, characterized in that the image-taking means comprise a matrix camera (36) for example of the C.C.D. type, provided, for example, with an objective lens of variable focal length.

12. A device according to claim 11, characterized in that the camera (36) is associated with a stroboscope (46) for taking still images of the medium (10) running at high speed.

13. A device according to any one of claims 9 to 12, characterized in that it includes means (38) for controlling the taking of images, said means comprising a photoelectric cell detecting a special mark (34) formed in the vicinity of the group of marks (26, 28, 30, 32) on the above-specified (10).

14. A device according to claim 13, characterized in that it includes means (48) for controlling said cell (38), which means are sensitive to the speed of medium displacement and which allow the photocell (38) to operate at regular intervals.

15. A device according to any one of claims 9 to 13, characterized in that when printing simultaneously on both faces of a strip of paper (10), it includes two identical means (36) for taking images, disposed on either side of the strip of paper (10), said means being connected to the same data processor means (40), said data processor means being suitable for determining the separation between a mark (26) formed on one face of the strip of paper (10) and a corresponding mark formed on the other face of said strip of paper, and for producing a signal for controlling displacement of one of the print rolls (14) to cancel said separation.

16. A device according to any one of claims 9 to 14, characterized in that it includes means (42) connected to the data processor means (40) for enabling an operator to modify the theoretical value of the separations between the marks (26, 28, 30, 32) formed on the medium, and/or to validate the measured separations as new theoretical values for subsequent operations after an initial adjustment on the basis of the original theoretical values.

FIG.1

FIG.2

FIG.3

FIG.4

<u>FIG.5</u>

<u>FIG.6</u>

```
          PRISE
        D'IMAGES

      DETERMINATION
          DES
       BARYCENTRES

         TEST
      DE COHERENCE
                    NON
     OUI

        CALCUL
      DES  ECARTS

VISUALISATION
 DES  ECARTS

       COMMANDE
      DES  MOTEURS

     TEMPORISATION
```

2